# FASCICULE DE BREVET EUROPEEN

(11) **EP 0 963 019 B1**
(45) Date de publication et mention de la délivrance du brevet: **11.07.2007**
(21) Numéro de dépôt: 99401347.2
(22) Date de dépôt: 04.06.1999
(51) Int. Cl.: H02B 1/30, H02B 1/32

(54) **Châssis pour enveloppe destinée à loger des appareillages électriques.**
Befestigungsgestell für ein elektrisches Gehäuse
Chassis for electrical cabinet

(30) Priorité: 04.06.1998 FR 9807143
(43) Date de publication de la demande: 08.12.1999
(73) Titulaire: Hispano Mecano Electrica S.A., 08786 Capellades (Barcelona) (ES)
(72) Inventeur: Alfons Boladeras Diaz, Josep, 08785 Vallbona D'Anoia (ES); Xaus Regordosa, Lluis, 08700 Igualada-Barcelona (ES)
(74) Mandataire: Carias, Alain

(56) Documents cités:
- EP-A- 0 760 546
- EP-A- 0 810 702
- DE-A- 2 659 483
- DE-A- 4 244 142
- DE-U- 29 509 555
- DE-U- 29 519 563
- FR-A- 2 681 402
- FR-A- 2 708 391
- GB-A- 728 292

## Description

La présente invention concerne un châssis pour armoire destinée à loger des appareillages électriques et comprenant des panneaux d'habillage, le châssis étant réalisé par l'assemblage de montants et de traverses, au moins deux montants du châssis comportant une aile munie d'évidements pour assurer l'assemblage de traverses et/ou de barreaux propres à porter des appareillages. Le terme "armoire" désigne toute enveloppe devant loger des appareillages électriques et vise les armoires proprement dites, les coffrets ou autres enveloppes analogues.

Elle concerne aussi l'armoire dotée du châssis considéré.

Les montants connus du genre mentionné ont généralement une section en forme de U qui assure leur rigidité. Cependant, cette forme de montant ne facilite pas l'accès en vue du montage des vis au travers des évidements pour la fixation des traverses, barreaux ou autres éléments de structure de l'armoire. Par ailleurs, les évidements d'un montant sont réalisés dans l'épaisseur de la tôle et ne présentent aucune configuration spécifique en vue de maintenir solidement les éléments montés lorsque ceux-ci subissent des efforts dus au montage d'appareils électriques.

Le document FR-A-2 708 391 décrit un châssis pour enveloppe destinée à loger des appareillages électriques conformément à l'art antérieur.

La présente invention a par conséquent pour but de fournir un montant de rigidité satisfaisante dont la constitution facilite l'assemblage par vis aux éléments de l'armoire associés aux appareillages.

Selon un aspect de invention, le châssis pour enveloppe destinée à loger des appareillages électriques, présentant les caractéristiques énoncées dans le préambule de la revendication 1, est caractérisé en ce que chaque évidement est étagé pour former dans l'épaisseur du pli de l'aile une surface d'appui située vers l'intérieur du châssis,
- des vis de fixation sont montées de manière que leurs têtes reposent contre les surfaces d'appui de manière à ne quasiment pas dépasser de la face interne de l'aile, et
- les vis sont associées à une traverse du châssis ou à une équerre de fixation d'un barreau destiné à porter des appareillages électriques.

Il en résulte un châssis rigide et facile à monter.

De préférence, chaque évidement de l'aile communique par une boutonnière avec l'extrémité du pli de l'aile et l'équerre est prééquipée de vis de fixation autotaraudeuses. Il est avantageux que le montant comporte un retour orthogonal à l'aile et doté de trous disposés à intervalles réguliers pour permettre la fixation de plastrons situés devant les barreaux de montage d'appareils, les trous étant ménagés avec un soyé avec lequel coopèrent des vis de fixation cylindriques de pas égal ou supérieur à l'épaisseur de la tôle du montant.

Selon un autre aspect de l'invention, l'enveloppe présentant les caractéristiques énoncées dans le préambule de la revendication 7, est caractérisée en ce que au moins deux montants du châssis comportent une âme fixée à la branche en retour d'un panneau latéral de l'armoire et une aile située sensiblement parallèle à l'âme de façon à prolonger celle-ci et constituée par un pli écrasé doté d'évidements pour assurer l'assemblage de traverses du châssis ou de barreaux porteurs d'appareillages, chaque équerre est fixée par une branche à l'aile au moyen de vis traversant les évidements et par une autre branche au barreau.

L'invention va à présent être décrite en regard des dessins annexés, parmi lesquels:
- la figure 1 est une vue en perspective d'une armoire;
- la figure 2 est une vue en perspective d'un montant du châssis de l'armoire;

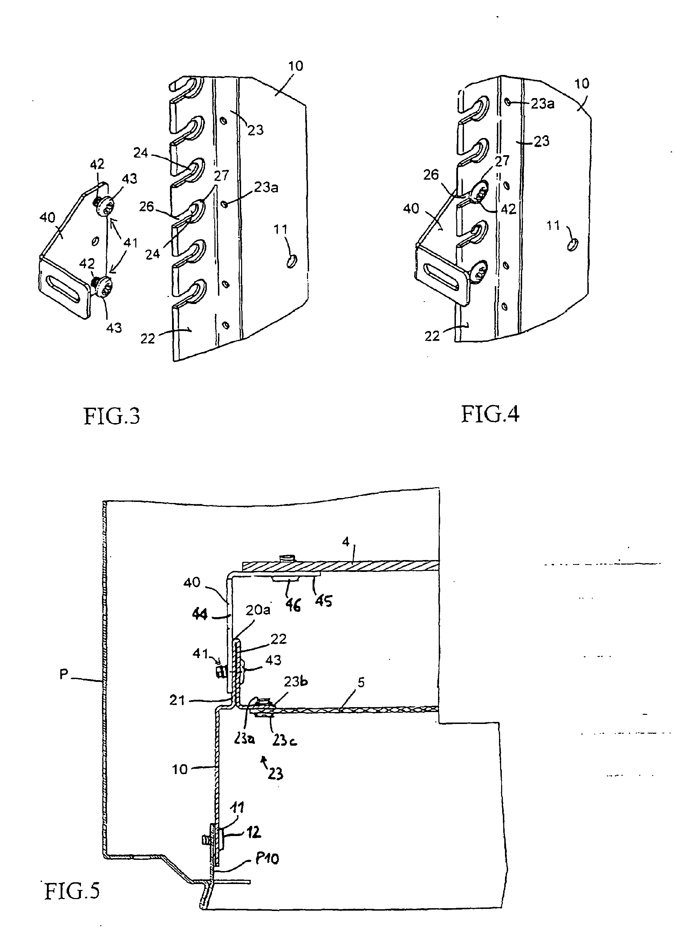

- les figures 3 et 4 sont des vues en perspective du montant, respectivement avant et après montage d'une équerre associable à des profilés propres à porter des appareillages;
- la figure 5 est une vue en coupe du montant auquel sont associés des éléments de structure de l'armoire.

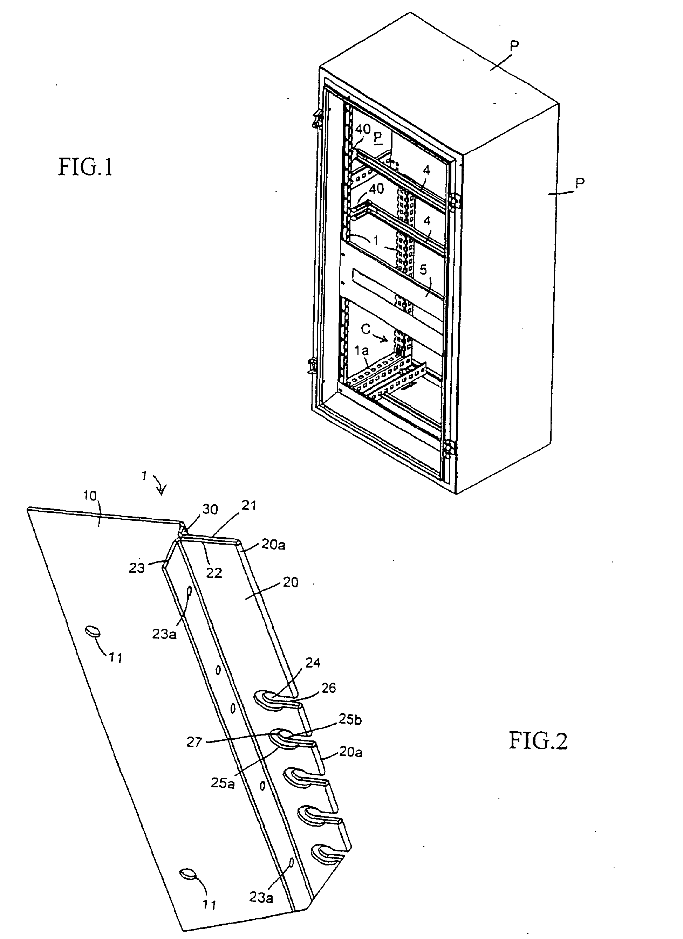

L'armoire illustrée figure 1 est destinée à loger des appareillages électriques. Elle comprend un châssis C et une enveloppe constituée par des panneaux P d'habillage du châssis et par une porte non représentée.

Le châssis C est réalisé par l'assemblage de montants verticaux 1 et de traverses horizontales 1a. Deux au moins des montants 1, plus particulièrement ceux qui se trouvent vers l'avant de l'armoire, comprennent une âme 10 prolongée parallèlement par une aile 20, avec un léger décrochement 30 reliant l'âme à l'aile et engendrant une meilleure rigidité (figures 2 et 5).

L'âme 10 du châssis comporte des trous 11 qui permettent de fixer au moyen de vis 12 le châssis à une branche en retour P10 d'un panneau latéral P de l'armoire (voir figure 5). L'aile 20 sert à assembler au montant, soit des traverses 1a constitutives du châssis, soit au moyen d'équerres 40 des barreaux 4 tels que des rails profilés destinés à porter des appareils électriques.

L'aile 20 est constituée par un pli écrasé qui présente deux faces jointives 21,22; la face externe 21 est orientée vers l'extérieur du châssis et se raccorde à l'âme par le décrochement 30. La face interne 22 se prolongeant par un retour orthogonal 23 à l'âme et à l'aile, dirigé dans la direction opposée au décrochement 30. Le pliage de l'aile 20 contribue à sa rigidité.

L'aile 20 est perforée d'évidements 24 alignés longitudinalement avec un pas approprié pour permettre la fixation par vis des traverses 1a et des barreaux 4. Chaque évidement 24 a un contour général circulaire, étagé avec une partie interne 25a et une partie externe 25b situées respectivement dans la face interne 22 et la face externe 21 du pli, la partie externe étant plus étroite que la partie interne pour former dans l'épaisseur du pli une surface d'appui 27 contre laquelle est destinée à venir en butée une tête de vis. Chaque évidement 24 communique avec l'extrémité 20a du pli de l'aile par une fente 26 en boutonnière plus étroite que la partie interne de l'évidement 24.

Pour fixer un barreau 4 au montant, il est prévu une équerre 40 dotée d'une branche 44 de fixation à l'aile 20, prééquipée pour cela de vis de fixation 41 autotaraudeuses, et d'une branche 45 de fixation au barreau 4 au moyen de vis 46. A l'assemblage, il n'est pas nécessaire de dévisser les vis puisque, quand on glisse l'équerre parallèlement à l'aile 20, la boutonnière 26 autorise le passage de chaque corps 42 de vis. Lorsqu'on visse les vis 41 dans les orifices associés de l'équerre 40, les têtes de vis 43 s'appliquent contre les surfaces annulaires d'appui 27 de manière à fixer l'équerre au montant. Elles sont alors sensiblement noyées dans l'épaisseur du pli de l'aile, en ne dépassant pas ou quasiment pas hors de sa face interne 22. Cette réalisation évite l'usage d'écrous et permet en outre d'assurer un bon maintien de l'équerre 40 lorsque celle-ci subit un effort de traction vers l'avant lors du montage ou du démontage d'appareils électriques sur le barreau 4.

Enfin, le retour 23 est muni d'alésages 23a espacés régulièrement avec un pas adapté au montage de plastrons ou platines 5 situées devant les barreaux 4 et pouvant servir de caches de protection aux appareils électriques installés sur les barreaux 4, ou pouvant servir directement de supports à des appareils électriques. Les trous 23a ménagés dans le retour 23 sont emboutis de manière à présenter un soyé 23b avec lequel coopèrent sans écrou des vis cylindriques de serrage 23c de pas égal ou supérieur à l'épaisseur de la tôle du montant.

Il convient d'observer que le monteur n'a pas à utiliser d'écrous pour monter le châssis et disposer les barreaux 4 et platines 5.

## Revendications

1. Châssis pour enveloppe destinée à loger des appareillages électriques et comprenant des panneaux d'habillage, le châssis (C) étant réalisé par l'assemblage de montants et de traverses, au moins deux montants (1) du châssis comportant une aile (20) munie d'évidements (24) pour assurer l'assemblage de traverses, l'aile (20) du montant étant constituée par un pli écrasé qui présente deux faces jointives interne et externe (21,22) et qui est doté des évidements (24), ***caractérisé en ce que*** :
- chaque évidement (24) est étagé pour former dans l'épaisseur du pli de l'aile (20) une surface d'appui (27) située vers l'intérieur du châssis,
- des vis de fixation (41) sont montées de manière que leurs têtes (43) reposent contre les surfaces d'appui (27) de manière à ne quasiment pas dépasser de la face interne (22) de l'aile, et
- les vis (41) étant associées à une traverse (1a) du châssis ou à une équerre (40) de fixation d'un barreau (4) destiné à porter des appareillages électriques.

2. Châssis selon la revendication 1, **caractérisé en ce que** chaque évidement étagé (24) de l'aile communique par une boutonnière (26) avec l'extrémité (20a) du pli de l'aile (20).

3. Châssis selon la revendication 2, **caractérisé en ce que** l'équerre (40) est prééquipée de vis de fixation (41) autotaraudeuses.

4. Châssis selon la revendication 1, **caractérisé en ce que** le montant (1) comporte un retour (23) orthogonal à l'aile (20) et doté de trous (23a) disposés à intervalles réguliers pour la fixation de platines (5) situées devant les barreaux (4) de montage d'appareils.

5. Châssis selon la revendication 4, **caractérisé en ce que** les trous (23a) ménagés dans le retour (23) sont ménagés avec un soyé (23b) avec lequel coopèrent des vis cylindriques (23c) de pas égal ou supérieur à l'épaisseur de la tôle du montant.

6. Châssis selon la revendication 1, **caractérisé en ce que** le montant (1) comporte une âme (10) munie de trous (11) de fixation à une branche (P10) en retour d'un panneau (P) de l'enveloppe, l'aile (20) du montant se prolongeant sensiblement parallèlement à l'âme (10).

7. Enveloppe destinée à loger des appareillages électriques, comprenant un châssis réalisé par l'assemblage de montants et de traverses, des panneaux d'habillage latéraux dotés d'une branche en retour et des barreaux porteurs d'appareillages électriques, ***caractérisée en ce que** :*
- au moins deux montants comportent une âme (10) fixée à la branche en retour (P10) d'un panneau latéral et une aile (20) située dans le prolongement sensiblement parallèle de l'âme (10) et constituée par un pli écrasé doté d'évidements (24) pour assurer l'assemblage de traverses (1a) ou de barreaux (4) porteurs d'appareillages,
- chaque équerre (40) est fixée par une branche (44) à l'aile (20) au moyen de vis (41) traversant les évidements (24) et par une autre branche (45) au barreau (4).

8. Enveloppe selon la revendication 7, **caractérisée en ce que** les évidements (24) sont étagés et **en ce que** les équerres sont fixées à l'aile par des vis (41) autotaraudeuses dont la tête est sensiblement noyée dans les évidements (24).

9. Enveloppe selon la revendication 7, **caractérisée en ce que** le montant (1) comporte un retour (23) orthogonal à l'aile (20) et doté de trous (23a) disposés à intervalles réguliers pour la fixation de plastrons (5) situés devant les barreaux (4) de montage d'appareils, les trous (23a). étant ménagés avec un soyé (23b) avec lequel coopèrent des vis cylindriques (23c) de pas égal ou supérieur à l'épaisseur de la tôle du montant.

## Claims

1. Frame for an enclosure designed to house electrical equipment and comprising cladding panels, the frame (C) being made by assembling uprights and crossmembers, at least two uprights (1) of the frame comprising a flange (20) furnished with recesses (24) for assembling the crossmembers, the flange (20) of the upright consisting of a compressed fold that has two internal and external joined faces (21, 22) and that is furnished with the recesses (24), **characterized in that**:
- each recess (24) is tiered to form, in the thickness of the fold of the flange (20), a bearing surface (27) situated towards the inside of the frame,
- fastening screws (41) are mounted so that their heads (43) rest against the bearing surfaces (27) so as not to or scarcely to protrude beyond the inner face (22) of the flange, and
- the screws (41) being associated with a crossmember (1a) of the frame or with a bracket (40) for fastening a cross-piece (4) designed to carry electrical equipment.

2. Frame according to Claim 1, **characterized in that** each tiered recess (24) of the flange communicates via a buttonhole (26) with the end (20a) of the fold of the flange (20).

3. Frame according to Claim 2, **characterized in that** the bracket (40) is pre-fitted with self-tapping fastening screws (41).

4. Frame according to Claim 1, **characterized in that** the upright (1) comprises a return (23) orthogonal to the flange (20) and furnished with holes (23a) placed at regular intervals for fastening plates (5) situated in front of the cross-pieces (4) for mounting apparatus.

5. Frame according to Claim 4, **characterized in that** the holes (23a) made in the return (23) are made with a burr (23b) with which cylindrical screws (23c) interact with a thread pitch that is equal to or greater than the thickness of the metal sheet of the upright.

6. Frame according to Claim 1, **characterized in that** the upright (1) comprises a web (10) furnished with holes (11) for fastening to a branch (P10) returning from a panel (P) of the enclosure, the flange (20) of the upright extending substantially parallel to the web (10).

7. Enclosure designed to house electrical equipment, comprising a frame made by assembling uprights and crossmembers, side cladding panels furnished with a return branch and cross-pieces carrying electrical equipment, **characterized in that**:
- at least two uprights comprise a web (10) attached to the return branch (P10) of a side panel and a flange (20) situated in the substantially parallel extension of the web (10) and consisting of a compressed fold furnished with recesses (24) for assembling crossmembers (1a) or equipment-carrying cross-pieces (4),
- each bracket (40) is attached via one branch (44) to the flange (20) by means of screws (41) passing through the recesses (24) and via another branch (45) to the cross-piece (4).

8. Enclosure according to Claim 7, **characterized in that** the recesses (24) are tiered and **in that** the brackets are attached to the flange by self-tapping screws (41) whose head is substantially sunk into the recesses (24).

9. Enclosure according to Claim 7, **characterized in that** the upright (1) comprises a return (23) orthogonal to the flange (20) and furnished with holes (23a) placed at regular intervals for attaching escutcheon plates (5) situated in front of the cross-pieces (4) for the mounting of apparatus, the holes (23a) being made with a burr (23b) with which cylindrical screws (23c) interact with a thread pitch equal to or greater than the thickness of the metal sheet of the upright.

## Patentansprüche

1. Gestell für ein Gehäuse, das dazu bestimmt ist, elektrische Geräte aufzunehmen und Verkleidungsplatten aufweist, wobei das Gestell (C) durch den Zusammenbau von Ständern und Querträgern hergestellt wird, wobei mindestens zwei Ständer (1) des Gestells einen Flügel (20) aufweisen, der mit Aussparungen (24) versehen ist, um den Zusammenbau der Querträger zu gewährleisten, wobei der Flügel (20) des Ständers aus einem zusammengedrückten Umschlag besteht, der zwei aneinander liegenden Innen- und Außenseiten (21, 22) aufweist und mit den Aussparungen (24) versehen ist, **dadurch gekennzeichnet, dass**:
- jede Aussparung (24) gestuft ist, um in der Dicke des Umschlags des Flügels (20) eine Auflagefläche (27) zu bilden, die zur Innenseite des Gestells hin angeordnet ist,
- Befestigungsschrauben (41) so montiert sind, dass ihre Köpfe (43) gegen die Auflageflächen (27) derart aufliegen, dass sie praktisch nicht von der Innenseite (22) des Flügels vorstehen, und
- die Schrauben (41) einem Querträger (1a) des Gestells oder einem Winkelbeschlag (40) zur Befestigung eines Stabs (4) zugeordnet sind, der dazu bestimmt ist, elektrische Geräte zu tragen.

2. Gestell nach Anspruch 1, **dadurch gekennzeichnet, dass** jede gestufte Aussparung (24) des Flügels über einen schmalen Einschnitt (26) mit dem Ende (20a) des Umschlags des Flügels (20) in Verbindung steht.

3. Gestell nach Anspruch 2, **dadurch gekennzeichnet, dass** der Winkelbeschlag (40) mit Befestigungs-Schneidschrauben (41) vorausgestattet ist.

4. Gestell nach Anspruch 1, **dadurch gekennzeichnet, dass** der Ständer (1) eine Umbiegung (23) orthogonal zum Flügel (20) und mit Löchern (23a) versehen aufweist, die in gleichmäßigem Abstand für die Befestigung von Platinen (5) angeordnet sind, die sich vor den Stäben (4) zur Montage von Geräten befinden.

5. Gestell nach Anspruch 4, **dadurch gekennzeichnet, dass** die in der Umbiegung (23) ausgebildeten Löcher (23a) mit einer Sicke (23b) ausgebildet sind, mit der zylindrische Schrauben (23c) mit einem Gewindegang gleich oder größer als die Dicke des Blechs des Ständers zusammenwirken.

6. Gestell nach Anspruch 1, **dadurch gekennzeichnet, dass** der Ständer (1) einen Steg (10) aufweist, der mit Löchern (11) zur Befestigung an einem nach hinten umgebogenen Schenkel (P10) einer Platte (P) des Gehäuses versehen ist, wobei der Flügel (20) des Ständers sich im Wesentlichen parallel zum Steg (10) verlängert.

7. Gehäuse zur Aufnahme von elektrischen Geräten, das ein durch den Zusammenbau von Ständern und Querträgern hergestelltes Gestell, seitliche Verkleidungsplatten, die mit einem nach hinten umgebogenen Schenkel versehen sind, und elektrische Geräte tragende Stäbe aufweist, **dadurch gekennzeichnet, dass**:
- mindestens zwei Ständer einen Steg (10), der am nach hinten umgebogenen Schenkel (P10) einer Seitenplatte befestigt ist, und einen Flügel (20) aufweisen, der sich in der im Wesentlichen parallelen Verlängerung des Stegs (10) befindet und aus einem zusammengedrückten Umschlag besteht, der mit Aussparungen (24) versehen ist, um den Zusammenbau von Querträgern (1a) oder von Geräte tragenden Stäben (4) zu gewährleisten,
- jeder Winkelbeschlag (40) mit einem Schenkel (44) mit Hilfe von die Aussparungen (24) durchquerenden Schrauben (41) am Flügel (20) und mit einem anderen Schenkel (45) am Stab (4) befestigt ist.

8. Gehäuse nach Anspruch 7, **dadurch gekennzeichnet, dass** die Aussparungen (24) gestuft sind und dass die Winkelbeschläge am Flügel durch Schneidschrauben (41) befestigt sind, deren Kopf im Wesentlichen in den Aussparungen (24) versenkt ist.

9. Gehäuse nach Anspruch 7, **dadurch gekennzeichnet, dass** der Ständer (1) eine Umbiegung (23) orthogonal zum Flügel (20) und mit Löchern (23a) versehen aufweist, die in gleichmäßigen Abständen für die Befestigung von Frontplatten (5) angeordnet sind, die sich vor den Stäben (4) zur Montage von Geräten befinden, wobei die Löcher (23a) mit einer Sicke (23b) ausgebildet sind, mit der zylindrische Schrauben (23c) zusammenwirken, deren Gewindegang gleich oder größer als die Dicke des Blechs des Ständers ist.
